# EUROPÄISCHE PATENTANMELDUNG

(11) **EP 1 566 339 A1**
(43) Veröffentlichungstag der Anmeldung: **24.08.2005**
(21) Anmeldenummer: 04003129.6
(22) Anmeldetag: 12.02.2004
(51) Int. Cl.: B65D 5/02, B65D 5/64

(54) **Mehrwegverpackung**

(71) Anmelder: TFS-Global Hanger Management GmbH, 48529 Nordhorn (DE)
(72) Erfinder: Bode, Hermann H., 48607 Ochtrup (DE)
(74) Vertreter: ten Brink, Carsten

(57) **Zusammenfassung**

Es wird eine Mehrwegverpackung (10) angegeben, die mit einem Klettverschluss derart verschließbar ist, dass ein sicherer und belastbarer Verschluss gegeben ist, der sich ohne Beschädigung der Mehrwegverpackung (10), insbesondere ohne Beeinträchtigung der Optik der Mehrwegverpackung (10), mehrfach zerstörungsfrei öffnen und schließen lässt, wobei der Klettverschluss durch ein Klettband (16) oder dergleichen und ein Filzband (17) oder dergleichen gebildet wird, dass an je zwei Deckellappen (12, 13) der Mehrwegwegverpackung (10) angebracht ist.

## Beschreibung

Die Erfindung betrifft eine Mehrwegverpackung, insbesondere in Form von Wellpappkartons, gemäß dem Oberbegriff des Anspruchs 1.

Derartige Mehrwegverpackungen sind allgemein bekannt.

Nachteilig bei diesen bekannten Mehrwegverpackungen ist jedoch die teilweise nur sehr bedingte Eignung für eine tatsächliche Wiederverwendbarkeit.

Mehrwegverpackungen weisen häufig als Verschluss dienende an sich bekannte Deckelstecklappen auf. Diese Stecklappen werden in geeignet konturierte, z.B. ausgestanzte, Stecklappen eingesteckt. Bei der mehrfachen Verwendung solcher Stecklappen verlieren diese, insbesondere bei Mehrwegverpackungen auf Wellpapp-Basis, ihre Steifigkeit, die für ein sicheres Halten des Verschlusses erforderlich ist. Zudem reißen die Deckelstecklappen häufig und teilweise nicht erst nach mehrfacher Benutzung ab oder ein, so dass auf diese Weise ebenfalls die Wirksamkeit des Verschlusses beeinträchtigt ist. Darüber hinaus ist das Verschließen einer solchen Mehrwegverpackung lästig und zeitaufwändig, weil die einzelnen Stecklappen sowie ggf. vorgesehene Laschen mühsam in die dafür vorgesehenen Ausnehmungen eingeführt werden müssen. Dabei sind die Ausnehmungen häufig nur vorgestanzt, so dass trotz einer Maßhaltigkeit der Ausnehmungen und der Lappen oder Laschen ein Einstecken oder Einführen nur mit erheblicher Geduld zu erreichen ist.

Zudem kommt es häufig vor, dass die jeweilige Mehrwegverpackung überfüllt wird. Dann ist ein sicherer Verschluss der Verpackung mit solchen Deckelstecklappen nicht mehr möglich. Dies versucht das jeweilige Personal dadurch zu kompensieren, dass die Öffnung der Mehrwegverpackung durch Kleben, z.B. mit Klebeband oder dergleichen, verschlossen wird. Damit ist zwar der Verschluss der Mehrwegverpackung wieder gegeben, es kommt allerdings beim Öffnen eines solchen Verschlusses häufig zu Beschädigung der Mehrwegverpackung, die deren spätere Wiederverwendbarkeit, insbesondere an Stellen, an denen auf eine einwandfreie äußere Erscheinung Wert gelegt wird, wie z.B. im Kassenbereich von Kaufhäusern, in Frage stellt.

Eine aufgrund solcher oder ähnlicher Beschädigungen oder Beeinträchtigungen nur einmal verwendbare oder nur einmal verwendete Mehrwegverpackung macht den Warenverkehr durch Untersuchung und evtl. Aussortieren beschädigter oder beeinträchtigter Mehrwegverpackungen aufwändig und zudem durch das notwendige Ersetzen beschädigter oder beeinträchtigter Mehrwegverpackungen durch einwandfreie, insbesondere neue Mehrwegverpackungen teuer.

Der Erfindung liegt daher die Aufgabe zugrunde eine Lösung anzugeben, bei der die o.g. Nachteile vermieden oder zumindest reduziert werden.

Diese Aufgabe wird erfindungsgemäß mit den Merkmalen des Anspruchs 1 gelöst. Dazu ist bei einer Mehrwegverpackung mit mindestens zwei, eine Öffnung der Mehrwegverpackung begrenzenden Deckellappen vorgesehen, dass die Deckellappen mit einem Klettverschluss aneinander fixierbar sind.

Die Erfindung geht dabei von der Erkenntnis aus, dass die Wiederverwendbarkeit der Mehrwegverpackung maßgeblich durch Beschädigungen, die beim Verschließen oder aufgrund des Verschließens der Mehrwegverpackung entstehen, in Frage gestellt ist. Die Erfindung schlägt zur Vermeidung dieses Problems die Verwendung eines zerstörungsfrei lösbaren Verschlusses für die Mehrwegverpackung vor. Als Verschluss kommt dabei vorzugsweise ein an sich bekannter Klettverschluss in Betracht, dessen Komponenten, also ein Klettband einerseits und ein Filzband andererseits, an geeigneten Stellen an der Mehrwegverpackung angebracht, insbesondere aufgeklebt sind. Haltewirkung des Klettverschlusses einerseits und die Art der Verbindung der Element des Klettverschlusses mit der Mehrwegverpackung, speziell die dabei wirksame Fläche, sind so aufeinander abgestimmt, dass sich der Klettverschluss öffnen lässt, ohne dass dabei eine Beschädigung der Mehrwegverpackung, etwa durch Abreißen eines der Elemente des Klettverschlusses, droht.

Als zerstörungsfrei lösbarer Verschluss kommt alternativ auch ein Klebverschluss oder dergleichen in Betracht, sofern gewährleistet ist, dass beim Lösen eines solchen Klebverschlusses die Mehrwegverpackung selbst nicht beschädigt wird. Denkbar sind dafür - analog zum Klettverschluss - zwei Klebelemente, die separat an der Mehrwegverpackung angebracht sind und beim Kontakt miteinander, vorzugsweise nur beim Kontakt miteinander, eine Klebwirkung entfalten, die ausreicht um die Mehrwegverpackung sicher zu verschließen, die aber nicht so groß ist, dass beim (beabsichtigten) Öffnen des Klebverschlusses die Klebelemente selbst von der Mehrwegverpackung abreißen.

Ein Einsatz eines Klettverschlusses an Verkaufsverpackungen ist bereits bekannt. So wird z.B. Software häufig in einem Karton ausgeliefert, der auf einer seiner großen Seitenflächen eine zusätzliche Klappe aufweist, die nicht zum Verschluss des Kartons beträgt und die am Karton mit einem Klettverschluss fixiert ist. Die Klappe wird verwendet um die Fläche der größten Seitenfläche des Kartons für Werbe- oder Produktinformationszwecke zu erhöhen. Die Klappe kann nämlich von Kunden aufgeschlagen werden (ohne dass dazu der Karton geöffnet werden muss) so dass die darunter liegende große Seitenfläche des Kartons zusammen mit der Innenfläche der Klappe sichtbar wird. Damit seht eine im Vergleich zur sonst gegeben Fläche der großen Seitenfläche des Kartons verdoppelte Fläche zur Anbringung von Werbung und Produktinformation zur Verfügung. Zudem steht noch die Aussenseite der Klappe für ähnliche Zwecke zur Verfügung, so dass sich die nutzbare Fläche verdreifacht. Der Klettverschluss dient aber nur der Fixierung der Klappe. Ein Verschließen des Kartons erfolgt mit dem Klettverschluss nicht. Zudem handelt es sich bei einer solchen Verkaufsverpackung nicht um eine zur Wiederverwendung vorgesehene Mehrwegverpackung.

Der Vorteil der Erfindung besteht darin, dass der Klettverschluss als zerstörungsfrei lösbare Verbindung einzelner Deckellappen verwendet wird um damit einen sicheren Verschluss der Mehrwegverpackung zu gewährleisten. Das bisher ungünstigerweise oft angewandte Verkleben der Deckellappen führt beim Öffnen der Verklebung in den überwiegenden Fällen zu irreparablen Schäden an der Mehrwegverpackung. Dabei ist eine Mehrwegverpackung nicht erst dann nicht mehr verwendbar, wenn einer der Deckellappen abgerissen oder deformiert ist, sondern bereits dann, wenn die Oberfläche, insbesondere auf dieser aufgedruckte Schriftzüge, etwa Markenzeichen und dergleichen, beschädigt sind, was sich häufig aufgrund des Abziehens von auf der Oberfläche angebrachtem Klebestreifen oder ähnlichem ergibt.

Vorteilhafte Ausgestaltungen der Erfindung sind Gegenstand der Unteransprüche.

Bevorzugt sind die Element des Klettverschlusses (oder analog die korrespondierenden Elemente eines entsprechenden Klebverschlusses) so angeordnet, dass ein erster Deckellappen auf einer im geschlossenen Zustand der Mehrwegverpackung zum Packungsäußeren weisenden Oberfläche ein Klett- oder Pilzband aufweist und dass ein zweiter Deckellappen auf einer im geschlossenen Zustand der Mehrwegverpackung zum Packungsinnern weisenden Oberfläche ein Filz-, Flausch- oder Veloursband aufweist. Auf diese Weise ist gewährleistet, dass das Klett- oder Pilzband bei geöffneter Mehrwegverpackung durch den jeweiligen Deckellappen selbst abgedeckt ist.

Bei der Verwendung der Mehrwegverpackung, etwa zum Sammeln wieder verwendbarer Kleiderbügel, wird die geöffnete Mehrwegverpackung häufig dort aufgestellt, wo die Kleiderbügel gesammelt werden, also im Kassenbereich, von Kaufhäusern und dergleichen. Für das Personal, das mit der von Kunden ausgewählten Kleidung hantiert und die Kleiderbügel entfernt, besteht die Gefahr, dass die ausgewählte Kleidung mit dem Klett- oder Pilzband in Berührung kommt und durch dessen Halteelemente festgehalten wird, was zu einer Beschädigung der Kleidung führen kann zumindest aber zu einer Verzögerung bei der Bedienung des Kunden führt. Dies ist verständlicherweise unerwünscht. Bei der oben beschriebenen Ausgestaltung der Erfindung ist eine solche Gefahr beseitigt, weil der Klettverschluss durch den jeweiligen Deckellappen verdeckt ist. Das Personal braucht also beim Hantieren mit der ausgewählten Kleidung nicht auf den Klettverschluss zu achten und kann aus der Kleidung die Kleiderbügel unmittelbar im Bereich der Mehrwegverpackung entfernen, so dass sich kurze Wege für das Personal ergeben.

Wenn die Mehrwegverpackung eine rechteckige, insbesondere quadratische Grundkontur und eine entsprechende Öffnung mit vier Deckellappen aufweist, ist das Klett- oder Pilzband und das Filz-, Flausch- oder Veloursband an zwei einander an der Öffnung jeweils gegenüberliegenden Deckellappen angebracht. Auf diese Weise wird eine maximale Haltewirkung des Klettverschlusses erreicht.

Bevorzugt ist das Klett- oder Pilzband und das Filz-, Flausch- oder Veloursband, das jeweils eine rechteckige Grundfläche aufweist, auf den jeweiligen Deckellappen aufgeklebt, wobei eine längste Seite des Klett- oder Pilzbands sowie des Filz-, Flausch- oder Veloursbands parallel zu den beiden freien Kanten des jeweiligen Deckellappens ausgerichtet ist. Das Aufkleben ist eine einfache und sichere, insbesondere dauerhaft belastbare Form der Anbringung von Klett- und Filzband an der Mehrwegverpackung. Durch die beschriebene Ausrichtung der rechteckig geformten Klett- und Filzbänder ist ein sicherer Verschluss der Mehrwegverpackung durch den Klettverschluss auch dann noch möglich, wenn die Mehrwegverpackung überfüllt ist und aufgrund dessen die einzelnen Deckellappen nicht mehr so weit umgeschlagen werden können, dass sie flach auch der Mehrwegverpackung aufliegen. Dadurch, dass die Deckellappen mit dem Klett- oder Filzband zusammen länger sind als die Öffnung weit ist - mit anderen Worten: die Deckellappen überlappen sich - ist auch bei überfüllten Mehrwegverpackungen die sich nur mit gewölbten Deckellappen schließen lassen, die Möglichkeit gegeben, dass Klett- und Filzband zumindest abschnittsweise noch miteinander in Kontakt gebracht werden können.

Bevorzugt kommt die Erfindung auch bei einer Mehrwegverpackung, die eine dreieckige Grundkontur und entsprechend eine dreieckige Öffnung mit drei Deckellappen aufweist (Dreieckskarton), zum Einsatz, wobei das Klett- oder Pilzband und das Filz-, Flausch- oder Veloursband an jeweils einem der Deckellappen angebracht, insbesondere angeklebt ist.

Wenn die dreieckige Öffnung eines solchen Dreieckskartons ein gleichschenkliges Dreieck mit zwei Schenkeln und einer diese verbindenden Grundseite bildet, ist bevorzugt das Klett- oder Pilzband an dem von einem der Schenkel des Dreiecks ausgehenden ersten Deckellappen und das Filz-, Flausch- oder Veloursband an dem von der Grundseite des die Öffnung bildenden Dreiecks ausgehenden zweiten Deckellappen angebracht. Eine hinsichtlich der Position von Klett- und Filzband vertauschte Anbringung ist ebenfalls möglich.

Eine für sämtliche Mehrwegverpackungen vorteilhafte Ausgestaltung besteht darin, dass der Deckellappen mit dem Klett- oder Pilzband sowie ggf. auch der Deckellappen mit dem Filz-, Flausch- oder Veloursband eine oder mehrere Falzungen zusätzlich zu der Falzung auf der Höhe der Öffnung der Mehrwegverpackung aufweist, so dass bei einer überfüllten Mehrwegverpackung der oder jeder Deckellappen leichter über dem über die Oberkante der Mehrwegverpackung hinausreichenden Inhalt geschlossen werden kann, indem die zusätzlichen Falze eine Einknicken des Deckellappen in gewünschter Richtung erleichtern und damit eine gewünschte Wölbung ermöglichen.

Die beschriebene Mehrwegverpackung ist besonders vorteilhaft zur Lagerung und/oder zum Transport von Kleiderbügeln vorgesehen oder kann besonders vorteilhaft zur Lagerung und/oder zum Transport von Kleiderbügeln verwendet werden.

Insgesamt wird also mit der Erfindung gewährleistet, dass der visuelle Abbau der Optik der Mehrwegverpackung deutlich reduziert ist. Bei sachgemäßer Behandlung der Mehrwegverpackung zeigen sich an dieser auch bei mehrfacher Verwendung nur die klassischen Gebrauchsspuren, wie sie sich durch den Transport, das Aufstellen, das Stapeln und die Benutzung der Mehrwegverpackung ergeben. Dadurch ist erstmals eine Langlebigkeit und eine Wiederverwendbarkeitsrate der Mehrwegverpackung erreicht, wie sie bisher nicht möglich war. Dies führt zu geringeren Kosten aufgrund geringeren Materialverbrauchs, weil in dem Kreislauf bei der Verwendung der Mehrwegverpackung weniger häufig beschädigte Mehrwegverpackungen durch neue Mehrwegverpackungen zu ersetzen sind.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

### Darin zeigen

- Fig. 1: als Mehrwegverpackung einen Karton mit rechteckiger Grundform,
- Fig. 2: eine Ausführungsform der Erfindung bei einem solchen Karton,
- Fig. 3: einen solchen Karton in verschlossenem Zustand bei Überfüllung,
- Fig. 4: als weitere Mehrwegverpackung einen Karton mit dreieckiger Grundfläche (Dreieckskarton) und
- Fig. 5: eine Draufsicht auf einen solchen Dreieckskarton mit geöffneten Deckellappen und
- Fig.6: eine Draufsicht auf einen solchen Dreieckskarton mit geschlossenen Deckellappen.

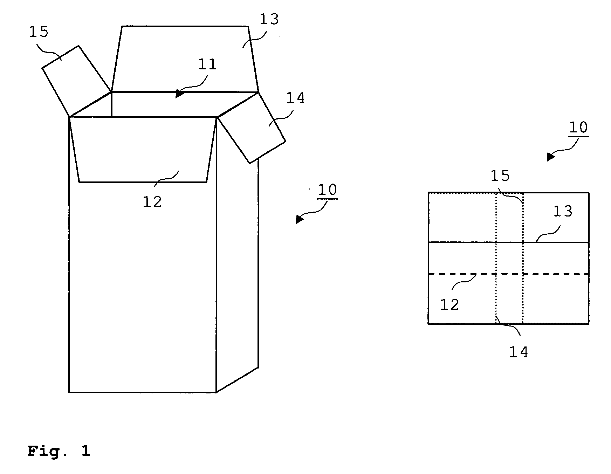

Fig. 1 zeigt als Mehrwegverpackung 10 einen Karton 10, der z.B. als Wellpappkarton ausgebildet sein kann. Ein solcher Karton 10 weist eine Öffnung 11 auf, die mit im Bereich der Öffnung 11 vorgesehenen Deckellappen 12, 13, 14, 15 verschließbar ist. Auf der rechten Seite der Darstellung in Fig. 1 ist der Karton 10 in perspektivischer Darstellung im offenen Zustand dargestellt. Man erkennt dass die Deckellappen 12-15 in an sich bekannter Weise über eine als Scharnier fungierende Falz mit dem Korpus des Kartons 10 verbunden sind. Auf der rechten Seite der Darstellung in Fig. 1 ist der Karton 10 von oben gesehen in geschlossenem Zustand dargestellt (zur Identifizierung der sich wechselseitig überlappenden Deckellappen 12-15 sind die jeweiligen Vorderkanten mit der Bezugsziffer versehen). Man erkennt, dass in Abhängigkeit von der Reihenfolge des Umklappens der Deckellappen 12-15 jeweils zwei an der Öffnung 11 einander gegenüberliegende Deckellappen 12-15 sich gegenseitig überlappen. Zunächst werden also zwei "seitliche" Deckllappen 14, 15 geschlossen, darauf wird der "hintere" Deckellappen 13 umgeklappt und schließlich der "vordere" Deckellappen 12 auf letzteren gelegt. Dabei ergibt sich nicht nur eine Überlappung "benachbarter" Deckellappen (Beispielsweise Deckellappen 13 und 14) sondern auch eine Überlappung der Deckllappen, die sich an der Öffnung 11 gegenüberliegen, also der Deckellappen 12 und 13 einerseits und der Deckellappen 14 und 15 andererseits.

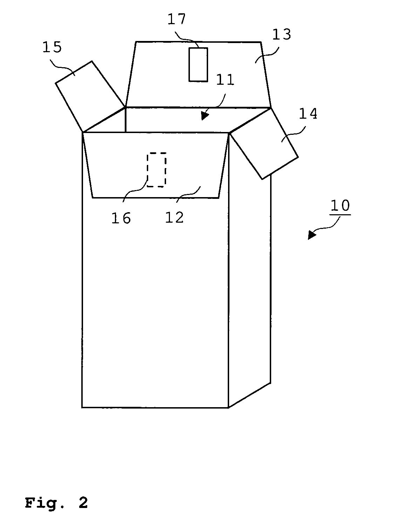

Fig. 2 zeigt eine Ausführungsform der erfindungsgemäßen Mehrwegverpackung am Beispiel des Kartons 10. Der dargestellte Karton 10 entspricht dem in Fig. 1 dargestellten Karton 10, wobei zwei sich an der Öffnung 11 gegenüberliegende Deckellappen 12, 13 jeweils Elemente eines Klettverschlusses aufweisen. Konkret ist in der dargestellten Ausführungsform vorgesehen, dass ein erster Deckellappen 12 als Element des Klettverschlusses ein Klett- oder Pilzband 16 aufweist. Dieses Klett- oder Pilzband 16, im Folgenden zusammenfassend als Klettband 16 bezeichnet, ist auf der im aufgeklappten Zustand des ersten Deckellappens 12 nicht sichtbaren Oberfläche dieses ersten Deckellappens 12 angebracht. Entsprechend ist das Klettband 16 auch nur durch seine gestrichelt dargestellte Kontur gezeigt. Wenn der erste Deckellappen 12 zum Schließen des Kartons 10 umgeklappt wird, weist diese zunächst nicht sichtbare Oberfläche vom Kartoninnern weg, also nach "außen". Ein dem ersten Deckellappen 12 an der Öffnung 11 des Kartons 10 gegenüberliegender zweiter Deckellappen 13 weist das zum Klettband komplementäre Element des Klettverschlusses, nämlich ein Filz-, Flausch- oder Veloursband 17, im Folgenden zusammenfassend kurz als Filzband 17 bezeichnet, auf. Das Filzband 17 befindet sich auf einer im aufgeklappten Zustand sichtbaren Oberfläche des zweiten Deckellappens 13. Beim Umklappen des zweiten Deckellappens 13 zum Verschließen des Kartons weist das Filzband 17 in Richtung auf das Kartoninnere. Zum Verschließen des Kartons 10 werden daher zunächst in beliebiger Reihenfolge die restlichen Deckellappen 14, 15 umgeklappt. Daraufhin wird zunächst der erste Deckellappen 12 mit dem Klettband 16 umgeklappt und schließlich der zweite Deckellappen 13 mit dem Filzband 17 so umgeklappt, dass Klettband 16 und Filzband 17 miteinander in Kontakt kommen und der Karton verschlossen ist.

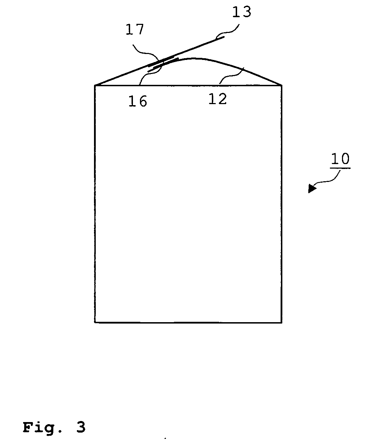

Ein solcher Klettverschluss ermöglich das sichere Verschließen des Kartons 10 auch noch bei einem überfüllten Karton 10, wenn sich also aufgrund des jeweiligen Kartoninhalts die Deckellappen 12-15 nicht mehr bis zu einer flachen Position umklappen lassen. Eine solche Situation ist in einer schematisch vereinfachten Seitenansicht des Kartons 10 in Fig. 3 dargestellt. Wie ohne weiteres erkennbar, besteht auch bei gewölbten Deckellappen 12, 13 (die weiteren Deckellappen 14, 15 sind aus Gründen der Übersichtlichkeit nicht dargestellt) noch die Möglichkeit, die beiden Elemente des Klettverschlusses miteinander in Kontakt zu bringen, so dass ein sicherer Verschluss gewährleistet ist.

Das Verschließen eines überfüllten Kartons 10 mittels Klettverschluss wird erleichtert, wenn die Elemente des Klettverschlusses, also Klettband 16 und Filzband 17 parallel zu den beiden freien Kanten des jeweiligen Deckellappens 12, 13 ausgerichtet sind. Der Klettverschluss verschließt den Karton 10 auch noch dann sicher, denn nur eine teilweise Überlappung von Klettband 16 und Filzband 17 gegeben ist. Die Möglichkeit, zumindest eine teilweise Überlappung von Klettband 16 und Filzband 17 zu erreichen ist verbessert, wenn Klettband 16 und Filzband 17 in der beschrieben Weise ausgerichtet sind.

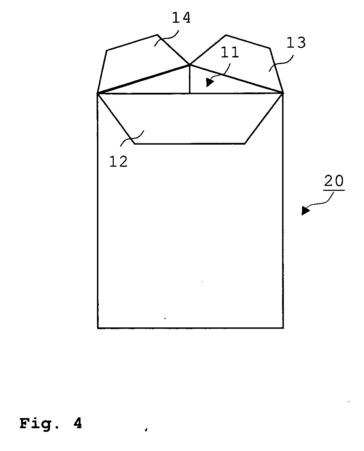

Fig. 4 zeigt als alternative Form einer Mehrwegverpackung 10 einen Dreieckskarton 20, der wie der Karton 10 (vgl. Fig. 1) eine Öffnung 11 und eine Anzahl von Deckellappen 12, 13, 14 aufweist. Die Öffnung 11 des Dreieckskartons 20 und die nicht sichtbare Grundfläche sind dreieckig. Der Dreieckskarton 20 hat damit insgesamt die Form eines Prismas. Die Öffnung 11 bildet insbesondere ein gleichschenkliges Dreieck. Die beiden Schenkel der dreieckigen Öffnung werden durch eine Grundseite der dreieckigen Öffnung verbunden.

Der erste Deckellappen 12 ist gelenkig (z.B. durch einen Falz oder dergleichen) mit dem Dreieckskarton 20 an einem der Schenkel des die Öffnung 11 bildenden Dreiecks verbunden. Der zweite Deckellappen 13 ist ebenso gelenkig mit dem Dreieckskarton 20 an der die Grundseite des die Öffnung 11 bildenden Dreiecks verbunden. Ein weiterer Deckellappen 14 ist mit dem Dreieckskarton 20 am verbleibenden Schenkel des die Öffnung 11 bildenden Dreiecks verbunden. Die Elemente des Klettverschlusses sind wieder (in Fig. 4 nicht dargestellt) - wie beim rechteckigen Karton 10 (vgl. Fig. 1) - am ersten und am zweiten Deckellappen 12, 13 angebracht.

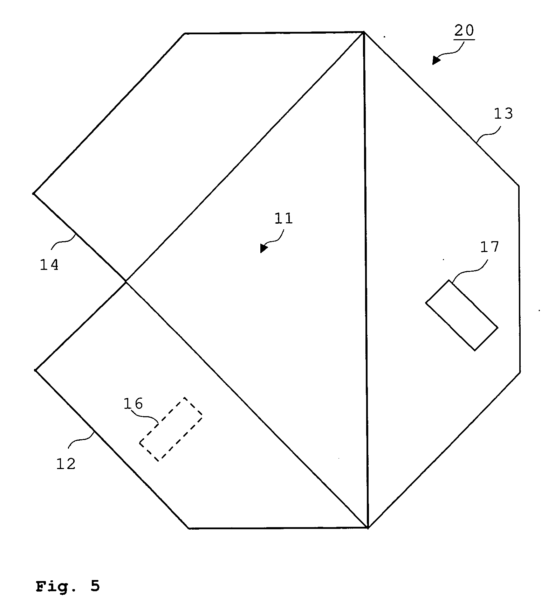

Fig. 5 zeigt eine Draufsicht auf den Dreieckskarton 20 mit aufgeklappten Deckellappen 12, 13, 14. In dieser Darstellung ist die Position der Element des Klettverschlusses, nämlich Klett- und Filzband 16, 17, dargestellt, die in der Darstellung in Fig. 4 aus Gründen der Übersichtlichkeit unterblieben ist.

Das Klettband 16 ist am ersten Deckellappen 12 angebracht und zwar derart, dass es bei aufgeklappten ersten Deckellappen 12 nicht sichtbar ist. Das Filzband 17 ist am zweiten Deckellappen 13 angebracht und zwar derart, dass es bei aufgeklapptem zweiten Deckellappen 13 sichtbar ist. Die Anbringung von Klett- und Filzband 16, 17 am Dreieckskarton 20 entspricht also der Anbringung am rechteckigen Karton 10 (vgl. Fig. 2). Wichtig ist wieder, dass durch das vollständige Umklappen des ersten Deckellappens 12 das Klettband 16 durch den ersten Deckellappen 12 selbst abgedeckt ist, so dass keine Gefahr besteht, dass Textilien oder dergleichen unerwünscht mit dem Klettband 16 in Kontakt kommen und dadurch ggf. beschädigt werden. Das Filzband 17 ist demgegenüber beim Kontakt mit Textilien nahezu unkritisch, so dass kein Problem daraus entsteht, dass das Filzband 17 bei umgeklapptem zweiten Deckellappen 13 sichtbar ist.

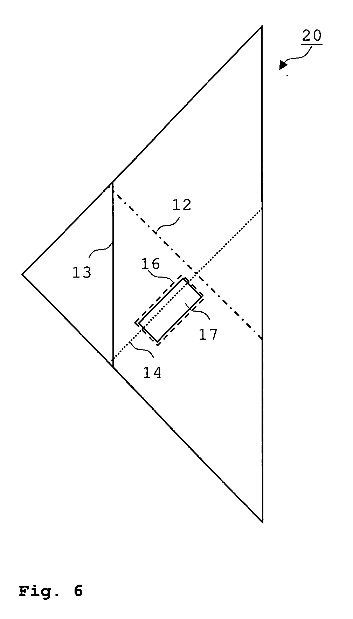

Fig. 6 zeigt zu der Darstellung in Fig. 5 eine Draufsicht auf den Dreieckskarton 20 in geschlossenem Zustand. Die Deckellappen 12-14 überlappen sich gegenseitig, so dass aus Gründen der Übersichtlichkeit und Identifizierbarkeit erneut nur die Vorderkanten der jeweiligen Deckellappen 12-14 mit einem Bezugszeichen versehen sind. Beim Verschließen des Dreieckskartons 20 wird zunächst der weitere Deckellappen 14 umgeklappt, dessen Vorderkante durch eine punktierte Linie dargestellt ist. Darauf wird der erste Deckellappen 12 mit dem Klettband 16 umgeklappt, dessen Vorderkante durch eine strich-punktierte Linie dargestellt ist. Schließlich wird der zweite Deckellappen 13 mit dem Filzband 17 umgeklappt. Beim Vollständigen Umklappen des zweiten Deckellappens 13 ergibt sich der Kontakt zwischen Klett- und Filzband 16, 17, der den Verschluss des Dreieckskartons 20 gewährleistet.

Für den Dreieckskarton 20 gilt genau wie für den rechteckigen Karton dass der Klettverschluss ein sicheres Verschließen auch von überfüllten Kartons ermöglicht (vgl. Fig. 3; für den Dreieckskarton 20 nicht erneut dargestellt).

Die Position von Klett- und Filzband 16, 17 kann in Bezug auf deren Anbringung am ersten und am zweiten Deckellappen auch vertauscht sein, derart, dass das Klettband 16 auf der im aufgeklappten Zustand nicht sichtbaren Oberfläche des zweiten Deckellappens 13 und das Filzband 17 auf der im aufgeklappten Zustand sichtbaren Oberfläche des ersten Deckellappens 12 angebracht ist. Wesentlich ist, dass das Klettband 16 bei geöffnetem Karton 10, 20 durch den jeweiligen Deckellappen abgedeckt ist, so dass ein unerwünschter Kontakt mit Textilien oder dergleichen vermieden wird.

Zusammenfassend lässt sich damit die Erfindung kurz wie folgt beschreiben:

Es wird eine Mehrwegverpackung 10 angegeben, die mit einem Klettverschluss derart verschließbar ist, dass ein sicherer und belastbarer Verschluss gegeben ist, der sich ohne Beschädigung der Mehrwegverpackung 10, insbesondere ohne Beeinträchtigung der Optik der Mehrwegverpackung 10, mehrfach zerstörungsfrei öffnen und schließen lässt, wobei der Klettverschluss durch ein Klettband 16 oder dergleichen und ein Filzband 17 oder dergleichen gebildet wird, dass an je zwei Deckellappen 12, 13 der Mehrwegwegverpackung 10 angebracht ist.

### Bezugszeichenliste

- 10: Mehrwegverpackung; Karton
- 11: Öffnung
- 12: Deckellappen
- 13: Deckellappen
- 14: Deckellappen
- 15: Deckellappen
- 16: Klettband
- 17: Filzband
- 18: ---
- 19: ---
- 20: Dreieckskarton

## Patentansprüche

1. Mehrwegverpackung mit mindestens zwei, eine Öffnung (11) der Mehrwegverpackung (10; 20) begrenzenden Deckellappen (12, 13),
**dadurch gekennzeichnet, dass**
die Deckellappen (12, 13) mit einem Klettverschluss (16, 17) aneinander fixierbar sind.

2. Mehrwegverpackung nach Anspruch 1,
wobei ein erster Deckellappen (12) auf einer im geschlossenen Zustand der Mehrwegverpackung (10; 20) zum Packungsäußeren weisenden Oberfläche ein Klett- oder Pilzband (16) aufweist und
wobei ein zweiter Deckellappen (13) auf einer im geschlossenen Zustand der Mehrwegverpackung (10; 20) zum Packungsinnern weisenden Oberfläche ein Filz-, Flausch- oder Veloursband (17) aufweist.

3. Mehrwegverpackung nach Anspruch 1 oder 2,
wobei die Mehrwegverpackung (10; 20) eine rechteckige, insbesondere quadratische Grundkontur und eine entsprechende Öffnung (11) mit vier Deckellappen (12, 13, 14, 15), aufweist, wobei das Klett- oder Pilzband (16) und das Filz-, Flausch- oder Veloursband (17) an zwei einander an der Öffnung (11) jeweils gegenüberliegenden Deckellappen (12, 13) angebracht ist.

4. Mehrwegverpackung nach Anspruch 3,
wobei das Klett- oder Pilzband (16) und das Filz-, Flausch- oder Veloursband (17) jeweils auf den jeweiligen Deckellappen (12, 13) aufgeklebt ist und jeweils eine rechteckige Grundfläche aufweist und wobei eine längste Seite des Klett- oder Pilzbands (16) sowie des Filz-, Flausch- oder Veloursbands (17) parallel zu den beiden freien Kanten des jeweiligen Deckellappens (12, 13) ausgerichtet ist.

5. Mehrwegverpackung nach Anspruch 1 oder 2,
wobei die Mehrwegverpackung (10; 20) eine dreieckige Grundkontur und entsprechend eine dreieckige Öffnung (11) mit drei Deckellappen (12, 13, 14), aufweist, wobei das Klett- oder Pilzband (16) und das Filz-, Flausch- oder Veloursband (17) an jeweils einem der Deckellappen (12, 13) angebracht, insbesondere angeklebt ist.

6. Mehrwegverpackung nach Anspruch 5,
wobei die dreieckige Öffnung (11) ein gleichschenkliges Dreieck mit zwei Schenkeln und einer diese verbindenden Grundseite bildet,
wobei das Klett- oder Pilzband (16) an dem von einem der Schenkel des die Öffnung (11) bildenden Dreiecks ausgehenden ersten Deckellappen (12) angebracht ist und
wobei das Filz-, Flausch- oder Veloursband (17) an dem von der Grundseite des die Öffnung (11) bildenden Dreiecks ausgehenden zweiten Deckellappen (13) angebracht ist.

7. Mehrwegverpackung nach Anspruch 5,
wobei die dreieckige Öffnung (11) ein gleichschenkliges Dreieck mit zwei Schenkeln und einer diese verbindenden Grundseite bildet,
wobei das Filz-, Flausch- oder Veloursband (17) an einem der von einem der Schenkel des Dreiecks ausgehenden Deckellappen (12) und das Klett- oder Pilzband (16) an dem von der Grundseite des Dreiecks ausgehenden Deckellappen (13) angebracht ist.

8. Mehrwegverpackung nach einem der Ansprüche 2 bis 7,
wobei der Deckellappen (12) mit dem Klett- oder Pilzband (16) eine oder mehrere Falzungen zusätzlich zu der Falzung auf der Höhe der Öffnung (11) der Mehrwegverpackung aufweist.

9. Mehrwegverpackung nach einem der vorangehenden Ansprüche,
**dadurch gekennzeichnet, dass**
sie zur Lagerung und/oder zum Transport von Kleiderbügeln vorgesehen ist.

10. Verwendung einer Mehrwegverpackung nach einem der Ansprüche 1 bis 8 zur Lagerung und/oder zum Transport von Kleiderbügeln.
